# EUROPÄISCHE PATENTSCHRIFT

(11) **EP 3 960 386 B1**
(45) Veröffentlichungstag und Bekanntmachung des Hinweises auf die Patenterteilung: **02.12.2026**
(21) Anmeldenummer: 21193709.9
(22) Anmeldetag: 30.08.2021
(51) Int. Cl.: B25F 5/02, G08C 17/02

(54) **HANDGEFÜHRTES, MOTORGETRIEBENES BEARBEITUNGSGERÄT**
HAND-HELD MOTOR-DRIVEN MACHINING APPARATUS
APPAREIL MANUEL MOTORISÉ

(30) Priorität: 31.08.2020 DE 102020210983
(43) Veröffentlichungstag der Anmeldung: 02.03.2022
(73) Patentinhaber: Andreas Stihl AG & Co. KG, 71336 Waiblingen (DE)
(72) Erfinder: Lücke, Johannes, 71334 Waiblingen (DE); Hampe, David, 70435 Stuttgart (DE)
(74) Vertreter: Patentanwälte Ruff, Wilhelm, Beier, Dauster & Partner mbB

(56) Entgegenhaltungen:
- EP-A1- 3 291 181
- DE-A1- 102018 210 553
- US-B2- 10 277 964

## Beschreibung

Die Erfindung bezieht sich auf ein handgeführtes Bearbeitungsgerät nach dem Oberbegriff des Anspruchs 1.

Ein solches Bearbeitungsgerät umfasst ein Gerätegehäuse, ein motorisch antreibbares Bearbeitungswerkzeug, einen Antriebsmotor für das Bearbeitungswerkzeug und ein mit dem Gerätegehäuse verbundenes Betriebsdatenkommunikationsbauteil, vorliegend abkürzend auch als Betriebsdatenbauteil oder einfach Bauteil bezeichnet. Dieses Bauteil beinhaltet eine Kommunikationsschnittstelle, die zur drahtlosen Übertragung von Betriebsdaten eingerichtet ist. Weiter beinhaltet dieses Bauteil einen Anbringungsbereich, mit dem es an einem Befestigungsbereich des Gerätegehäuses angebracht ist, ein Bauteilgehäuse, einen Batterieaufnahmeraum im Bauteilgehäuse und auf einer dem Anbringungsbereich abgewandten Bauteilgehäuseseite einen abnehmbaren, den Batterieaufnahmeraum nach außen abdeckenden Gehäusedeckel.

Das Bearbeitungsgerät kann z.B. ein boden- oder handgetragenes Garten- oder Forstbearbeitungsgerät sein, wie eine Motorsäge, eine Heckenschere, ein Laubbläser, ein Laubsauger, ein Rasenmäher, ein Hochentaster oder ein Freischneider, oder es kann ein anderweitiges handgeführtes Bearbeitungsgerät sein, wie ein Akkuschrauber, eine Bohrmaschine, eine Küchenmaschine etc.

Die Betriebsdaten können z.B. Daten über die Betriebsdauer des Bearbeitungsgerätes und spezieller von dessen Bearbeitungswerkzeug bzw. von dessen Antriebsmotor und/oder andere werkzeugbetriebsrelevante Daten umfassen, wie Antriebstemperaturen, Antriebsleistungen, Beschleunigungen, aus akustischen Signalen gewonnene Daten, Lastdaten, werkzeugbenutzerbezogene Daten, Lade- und/oder Spannungszustände eines Energiespeichers für den Antriebsmotor, Einsatzorte etc. Die Kommunikationsschnittstelle kann z.B. unter Verwendung des sogenannten iBeacon-Format arbeiten bzw. als WLAN- oder Bluetooth-Schnittstelle ausgebildet sein.

Die Offenlegungsschrift EP 3 291 181 A1 offenbart ein Bearbeitungsgerät der eingangs genannten, gattungsgemäßen Art. Beim dortigen Bearbeitungsgerät ist das dort als Gerät zur Erfassung von Betriebsdaten eines Werkzeugs bezeichnete Betriebsdatenkommunikationsbauteil außen am Gerätegehäuse angebracht, z.B. an eine Außenseite des Gerätegehäuses angeschraubt oder dort mittels einer rastenden Verbindung gehalten oder eingesetzt in eine korrespondierende, gehäuseaußenseitige Aufnahme eines Typenschildbereichs des Gerätegehäuses, wobei mittels einer Weichkomponente oder einer schaumartigen Vergussmaße eine mechanische Entkopplung zwischen dem Betriebsdatenbauteil und dem Gerätegehäuse vorgesehen sein kann oder das Betriebsdatenbauteil auf das Gerätegehäuse aufgeklebt ist.

Die Offenlegungsschrift US 2014/0070924 A1 offenbart ein System zum Identifizieren eines Typs eines Elektrowerkzeugs mit einem außen an einem Gerätegehäuse des Elektrowerkzeugs anbringbaren Benutzungsanbauteil zur Erfassung, Auswertung und Übertragung von Betriebsdaten.

Die Patentschrift US 10.277.964 B2 offenbart ein akkubetriebenes Bearbeitungswerkzeug, bei dem ein Betriebsdatenkommunikationsbauteil auf einer Leiterplatte montiert und mit dieser sowie einer zugeordneten Flachbatterie in einem Aufnahmeschlitz eines Gerätegehäuses aufgenommen ist, der sich innerhalb oder außerhalb eines Akkupack-Anbringungsbereichs befindet und durch einen aufschraubbaren Schlitzdeckel verschlossen werden kann.

Die Offenlegungsschrift WO 2013/134715 A2 offenbart ein Flottenmanagementsystem für im Freien verwendete Bearbeitungsgeräte, wie Garten- oder Forstbearbeitungsgeräte, wobei dieses System unter anderem eine vom Benutzer getragene Identifikationseinheit, eine Datenmanagement-Servereinheit und einen im Inneren des jeweiligen Bearbeitungsgerät eingebauten Datensensor mit einem Empfänger, einem Speicher, einem Prozessor und einem oder mehreren Sensoren zur Erfassung und Auswertung von Betriebsdaten beinhaltet. Beim dortigen Datensensor kann es sich z.B. um einen Zündungserkennungssensor, der in oder an einer Zündeinheit eines Verbrennungsmotors des Bearbeitungsgerätes angeordnet ist, oder um einen Sensor zur Kraftstoffzufuhrerkennung, der in oder an einer Kraftstoffzufuhreinheit eines Verbrennungsmotors angeordnet ist, oder um einen chipintegrierten Sensor handeln, der auf einer Leiterplatte einer Motorsteuerung eines elektrischen Antriebsmotors des Bearbeitungsgerätes angeordnet ist.

Der Erfindung liegt als technisches Problem die Bereitstellung eines handgeführten Bearbeitungsgerätes der eingangs genannten Art zugrunde, das gegenüber dem oben erläuterten Stand der Technik Vorteile insbesondere aufgrund der Positionierung des Betriebsdatenkommunikationsbauteils bietet.

Die Erfindung löst dieses Problem durch die Bereitstellung eines handgeführten Bearbeitungsgerätes mit den Merkmalen des Anspruchs 1. Bei diesem Bearbeitungsgerät befindet sich der Befestigungsbereich des Gerätegehäuses, an dem das Betriebsdatenkommunikationsbauteil mit seinem Anbringungsbereich angebracht ist, an einer Innenseite einer Außenwandung des Gerätegehäuses. Es zeigt sich, dass dies eine besonders vorteilhafte Positionierung des Betriebsdatenbauteils darstellt.

Zum einen bietet diese Platzierung des Betriebsdatenbauteils den Vorteil, dass das Bauteil durch die angrenzende Außenwandung des Gerätegehäuses vor von außen einwirkendem Schmutz, einer etwaigen Beschädigung durch Stoßeinwirkungen und einem Ablösen vom Gerätegehäuse sowie einem dadurch bedingten etwaigen Verlieren gut geschützt ist. Zum anderen vermeidet diese Realisierung des Betriebsdatenbauteils als separate, an der Innenseite des Gerätegehäuses angebrachte, d.h. als vom übrigen Bearbeitungsgerät separat nachträglich anzubringende, Gerätekomponente die Notwendigkeit einer Funkgerätzulassung für das Bearbeitungsgerät, wie sie bei einem in das Gehäuseinnere fest integrierten Einbau des Betriebsdatenbauteils erforderlich sein kann, wenn die Kommunikationsschnittstelle einen entsprechenden Funkkanal benutzt.

Erfindungsgemäß weist das Gerätegehäuse einen Akkuschacht zum entnehmbaren Einsetzen einer den Antriebsmotor speisenden Akkumulatoreinheit auf, und das Betriebsdatenkommunikationsbauteil liegt vom Akkuschacht her zugänglich frei. Dies hat den Vorteil, dass das Betriebsdatenbauteil über den Akkuschacht zugänglich ist, wenn die Akkumulatoreinheit aus dem Akkuschacht herausgenommen ist. Diese Zugänglichkeit kann z.B. zum Anbringen und/oder Abnehmen des Betriebsdatenbauteils und/oder zum Wechseln einer elektrischen Batterie des Bauteils genutzt werden.

Des Weiteren liegt der Gehäusedeckel vom Akkuschacht her zugänglich frei. Dadurch kann ein im Batterieaufnahmeraum aufgenommenes Batterieelement, das im Bauteil zu dessen elektrischer Versorgung vorgesehen sein kann, auf einfache Weise ausgetauscht werden, ohne dass das Gerätegehäuse demontiert werden muss und ohne dass das Betriebsdatenbauteil von seiner Befestigung innen an der Außenwandung des Gerätegehäuses abgenommen werden muss.

In einer Weiterbildung der Erfindung beinhaltet das Betriebsdatenkommunikationsbauteil eine mit mindestens einem Sensor gekoppelte Auswerteeinrichtung zur Ermittlung der Betriebsdaten anhand von durch den Sensor oder die Sensoren erfassten, von einem Betriebszustand des Bearbeitungswerkzeugs abhängigen Messdaten. Die Auslegung des Sensors bzw. der Sensoren richtet sich nach den für die Ermittlung der zu bestimmenden Betriebsdaten benötigten Messdaten bzw. den betreffenden Messgrößen, wie aus dem Stand der Technik an sich bekannt. Solche Sensoren können z.B. induktive Sensoren, Temperatursensoren, akustische Sensoren und Beschleunigungssensoren sein. Die durch diese Auswertung gewonnenen Betriebsdaten können dann über die Kommunikationsschnittstelle übertragen werden. Alternativ kann das Bauteil die Messdaten direkt als Betriebsdaten z.B. zu einer externen Auswerteeinrichtung übertragen.

In einer Ausgestaltung der Erfindung weist das Betriebsdatenkommunikationsbauteil einen Betriebsdatenspeicher zum Speichern der von der Auswerteeinrichtung ermittelten Betriebsdaten auf. Die Betriebsdaten können dann aus dem Betriebsdatenspeicher über die Kommunikationsschnittstelle übertragen werden. Alternativ können die Betriebsdaten ohne Speicherung im Betriebsdatenbauteil übertragen werden.

In einer Ausgestaltung der Erfindung weist das Betriebsdatenkommunikationsbauteil den mindestens einen Sensor auf, d.h. der Sensor ist integraler Bestandteil des Bauteils, vorzugsweise in ein gemeinsames, einheitliches Bauteilgehäuse integriert. Das Betriebsdatenkommunikationsbauteil ist in diesem Fall als ein kombiniertes Betriebsdatenerfassungs- und Betriebsdatenkommunikationsbauteil gebildet, wobei es als ein einzelner Baukörper realisiert sein kann oder aus mehreren einzelnen, separaten Baukörpern bestehen kann. Alternativ bildet der Sensor ein vom Betriebsdatenkommunikationsbauteil losgelöst angeordnetes, eigenständiges Bauteil.

In einer Ausgestaltung der Erfindung weist der Akkuschacht eine Schachtöffnung an einer Rückseite oder einer Oberseite des Gerätegehäuses auf, und der Befestigungsbereich befindet sich an einer an die Seite mit der Schachtöffnung angrenzenden Seite des Gerätegehäuses. Dies stellt eine für viele Anwendungen günstige Lage der Schachtöffnung dar, über die eine zugehörige Akkumulatoreinheit, z.B. ein entsprechender Akkupack, in den Akkuschacht eingefügt bzw. wieder herausgenommen werden kann, und trägt zu einer problemlosen Zugänglichkeit des Betriebsdatenbauteils über den Akkuschacht und dessen Schachtöffnung bei, wenn die Akkumulatoreinheit herausgenommen ist.

In einer weiteren Ausgestaltung der Erfindung befindet sich der Befestigungsbereich axial auf Höhe des Akkuschachts an einer Längsseite oder an einer Unterseite oder an der Oberseite des Gerätegehäuses. Dies stellt vorteilhafte Platzierungsmöglichkeiten für das Betriebsdatenbauteil bei gleichzeitig guter Zugänglichkeit über den Akkuschacht dar.

In einer Ausgestaltung der Erfindung weist das Bearbeitungsgerät einen axialen Geräteschaft mit einem hinteren Endbereich, an dem sich das Gerätegehäuse befindet, und einem vorderen Endbereich auf, an dem sich das Bearbeitungswerkzeug befindet, und der Befestigungsbereich befindet sich axial zwischen dem hinteren Endbereich des Geräteschafts und dem Akkuschacht. Dies stellt eine vorteilhafte Positionierungsmöglichkeit für das Betriebsdatenbauteil für den Fall dar, dass es sich bei dem Bearbeitungsgerät um ein solches vom sogenannten Schafttyp handelt, bei dem das Bearbeitungswerkzeug und das Gerätegehäuse über den axialen Geräteschaft miteinander verbunden sind, wie z.B. bei einem Freischneider, einem Hochentaster etc.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine teilweise schematische Seitenansicht und perspektivische Ausschnittansicht eines handgeführten elektrischen Bearbeitungsgerätes mit unterseitig innen platziertem Betriebsdatenkommunikationsbauteil,
- Fig. 2: eine Draufsicht von oben auf das Betriebsdatenkommunikationsbauteil,
- Fig. 3: eine Querschnittansicht längs einer Linie III-III in Fig. 1 für eine andere Platzierung des Betriebsdatenkommunikationsbauteils,
- Fig. 4: eine Längsschnittansicht eines Gerätegehäuses des Bearbeitungsgerätes von Fig. 1 mit verschiedenen alternativen Platzierungen des Betriebsdatenkommunikationsbauteils,
- Fig. 5: eine ausschnittweise Perspektivansicht des Gerätegehäuses von Fig. 4 zur Veranschaulichung einer oberseitigen Platzierung des Betriebsdatenkommunikationsbauteils,
- Fig. 6: eine Detailansicht eines Bereichs VI in Fig. 4,
- Fig. 7: eine Detailansicht eines Bereichs VII in Fig. 4,
- Fig. 8: die Schnittansicht von Fig. 4 bei herausgenommener Akkumulatoreinheit für eine Variante mit längsseitiger Platzierung des Betriebsdatenkommunikationsbauteils und
- Fig. 9: eine ausschnittweise Querschnittansicht längs einer Linie IX-IX in Fig. 8.

Das in den Figuren in einigen exemplarischen Ausführungsvarianten und verschiedenen Darstellungen gezeigte, handgeführte Bearbeitungsgerät beinhaltet ein Gerätegehäuse 1, ein motorisch antreibbares Bearbeitungswerkzeug 2, einen Antriebsmotor 3 für das Bearbeitungswerkzeug 2 und ein an dem Gerätegehäuse 1 angebrachtes Betriebsdatenkommunikationsbauteil 4 mit einer Kommunikationsschnittstelle, die zur drahtlosen Übertragung von Betriebsdaten eingerichtet ist.

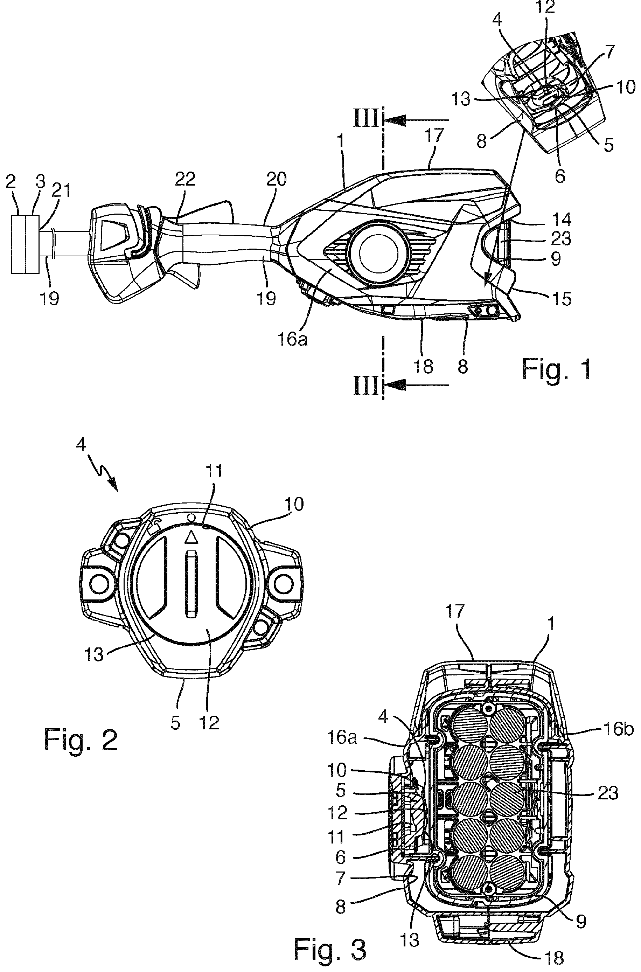

Dabei sind das Bearbeitungswerkzeug 2 und der Antriebsmotor 3, die vorliegend nicht näher interessieren, lediglich schematisch in Fig. 1 für den Fall eines Bearbeitungsgerätes vom Schafttyp gezeigt. Während Fig. 1 eine Ausführung des Bearbeitungsgerätes vom Schafttyp darstellt, bei der sich der Antriebsmotor 3 ebenso wie das Bearbeitungswerkzeug 2 an einem vorderen Endbereich 21 eines Geräteschafts 19 befindet, ist in alternativen Ausführungen der Antriebsmotor 3 an anderer Stelle angeordnet, z.B. im Inneren des Gerätegehäuses 1, wie dem Fachmann als derartige Motorpositionierungsoption geläufig, was daher hier keiner näheren Erläuterungen bedarf. Der Geräteschaft 19 verläuft im Wesentlichen parallel zu einer Längsachse bzw. axialen Richtung des Gerätegehäuses.

Das Betriebsdatenkommunikationsbauteil 4 weist einen Anbringungsbereich 5 auf, bei dem es sich um eine flächige Anbringungshauptseite, wie in den gezeigten Ausführungen, oder alternativ z.B. um einen profilierten Bereich oder einen punktuellen Bereich an der Außenseite desselben handeln kann und mit dem es an einem Befestigungsbereich 6 des Gerätegehäuses 1 angebracht ist. Dieser Befestigungsbereich 6 befindet sich an einer Innenseite 7 einer Außenwandung 8 des Gerätegehäuses 1. Das Anbringen des Betriebsdatenkommunikationsbauteils 4 mit seinem Anbringungsbereich 5 am Befestigungsbereich 6 des Gerätegehäuses 1 kann auf eine beliebige, hierfür dem Fachmann an sich bekannte Weise erfolgen, z.B. mittels einer Klebeverbindung, einer Schraubverbindung oder einer Klemm-/Rastverbindung.

Die gehäuseinnenseitige Platzierung des Betriebsdatenkommunikationsbauteils 4 gewährleistet durch die außen angrenzende Außenwandung 8 des Gerätegehäuses 1 einen sicheren Schutz des Bauteils 4 vor äußeren Einflüssen. Da Betriebsdatenkommunikationsbauteil 4 als eigenständiges Bauteil am Gerätegehäuse 1 befestigt werden kann, bedarf es keiner zwingenden Funkgerätzulassung für das Bearbeitungsgerät insgesamt. Die Anbringung des Betriebsdatenkommunikationsbauteils 4 direkt innen an der Außenwandung 8 des Gerätegehäuses 1 begünstigt eine optimale Kommunikationsfähigkeit des Betriebsdatenkommunikationsbauteils 4 mit der Außenumgebung ohne störende Einflüsse durch anderweitige, funkabschirmende, im Gerätegehäuse 1 untergebrachte Gerätekomponenten.

Bei dem Bearbeitungsgerät kann es sich beispielsweise um ein Garten- oder Forstbearbeitungsgerät handeln, das handgeführt ist, wie eines der eingangs explizit genannten Geräte. Zur Handführung weist das Bearbeitungsgerät einen oder mehrere Handgriffe auf, die je nach Typ des Gerätes geeignet konfiguriert und angeordnet sind, wie dem Fachmann geläufig, was daher hier keiner näheren Erläuterungen bedarf. In den gezeigten Beispielen gehört dazu eine Bediengriffeinheit 22 mit einem Griffbereich, der vom Benutzer mit einer Hand umgriffen werden kann, und mit am oder in der Nähe des Griffbereichs angeordneten Bedienelementen, mit denen der Benutzer unter anderem den Antriebsmotor steuern kann.

Das Betriebsdatenkommunikationsbauteil 4 kann z.B. ein solches sein, wie es in der bereits eingangs erwähnten Offenlegungsschrift EP 3 291 181 A1 offenbart ist, was daher hier keiner näheren Erläuterungen bedarf. In einer solchen Ausführung und in ähnlichen Ausführungen beinhaltet das Betriebsdatenkommunikationsbauteil 4 eine mit mindestens einem Sensor gekoppelte Auswerteeinrichtung zur Ermittlung der Betriebsdaten anhand von durch den Sensor erfassten, von einem Betriebszustand des Bearbeitungswerkzeugs 2 abhängigen Messdaten und optional des Weiteren einen Betriebsdatenspeicher zum Speichern der von der Auswerteeinrichtung ermittelten Betriebsdaten. Dabei beinhaltet in entsprechenden Realisierungen das Betriebsdatenkommunikationsbauteil selbst auch den einen oder die mehreren Sensoren oder einen Teil der Sensoren. Als Sensoren kommen beispielsweise induktive Sensoren, Temperatursensoren, akustische Sensoren und Beschleunigungssensoren in Betracht.

In erfindungsgemäßen Ausführungen handelt es sich bei dem Bearbeitungsgerät, wie in den gezeigten Beispielen, um ein elektrisches Bearbeitungsgerät, d.h. der Antriebsmotor 3 ist ein Elektromotor. Zur Speisung dieses Elektromotors ist, wie in den gezeigten Beispielen, eine Akkumulatoreinheit 23, d.h. ein Akku bzw. ein Akkupack oder dergleichen, vorgesehen sein. In diesen Fällen weist das Gerätegehäuse 1, wie in den gezeigten Beispielen, bevorzugt einen Akkuschacht 9 zum entnehmbaren Einsetzen der den Antriebsmotor 3 speisenden Akkumulatoreinheit 23 auf.

Das Betriebsdatenkommunikationsbauteil 4 ist erfindungsgemäß derart an der Innenseite 7 der Außenwandung 8 des Gerätegehäuses 1 platziert, dass es vom Akkuschacht 9 her zugänglich freiliegt. Dadurch kann das Betriebsdatenkommunikationsbauteil 4 vom Akkuschacht 9 her an den gewünschten Befestigungsbereich 6 herangebracht und dort befestigt werden, bevor die Akkumulatoreinheit 23 in den Akkuschacht 9 eingefügt wird bzw. nachdem sie aus diesem herausgenommen worden ist. Wenn der Akkuschacht 9 nicht mit der Akkumulatoreinheit 23 belegt ist, bleibt das Betriebsdatenkommunikationsbauteil 4 vom Akkuschacht 9 her weiterhin zugänglich, z.B. um es im Defektfall gegen ein neues auszutauschen oder um eine im Betriebsdatenkommunikationsbauteil 4 enthaltene Batterie zu wechseln.

In erfindungsgemäßen Ausführungen beinhaltet das Betriebsdatenkommunikationsbauteil 4, wie bei den gezeigten Beispielen, ein Bauteilgehäuse 10, einen Batterieaufnahmeraum 11 im Bauteilgehäuse 10 und einen abnehmbaren, den Batterieaufnahmeraum 11 nach außen abdeckenden Gehäusedeckel 12 auf einer dem Anbringungsbereich 5 abgewandten Bauteilgehäuseseite 13. Dabei liegt der Gehäusedeckel 12 vom Akkuschacht 9 her zugänglich frei. Dies ermöglicht im Bedarfsfall ein einfaches Tauschen einer im Batterieaufnahmeraum 11 aufgenommenen Batterie, die als elektrische Energiequelle für stromverbrauchende Komponenten des Betriebsdatenkommunikationsbauteils 4 dient. Für einen solchen Batteriewechsel braucht der Benutzer lediglich vom Akkuschacht 9 her den Gehäusedeckel 12 vom Bauteilgehäuse 11 abnehmen, die auszutauschende Batterie entnehmen, eine neue Batterie einsetzen und den Gehäusedeckel 12 wieder am Bauteilgehäuse 10 anbringen. In alternativen, nicht erfindungsgemäßen Ausführungen kommt das Betriebsdatenkommunikationsbauteil 4 ohne eigene Batterie aus, z.B. in Fällen, in denen es drahtlos von außen mit Energie versorgt wird.

In erfindungsgemäßen Ausführungen weist der Akkuschacht 9, wie bei den gezeigten Beispielen, eine Schachtöffnung 14 auf, die sich an einer Rückseite 15 des Gerätegehäuses 1, wie bei den gezeigten Beispielen, oder alternativ an einer Oberseite 17 des Gerätegehäuses 1 befindet. Die Rückseite 15 bildet hierbei die dem Bearbeitungswerkzeug 2 abgewandte Seite des Gerätegehäuses 1, d.h. dessen in Längsrichtung hintere Seite. Der Befestigungsbereich 6 zum Anbringen des Betriebsdatenkommunikationsbauteils 4 an der Innenseite 7 der Außenwandung 8 des Gerätegehäuses 1 befindet sich in diesem Fall bevorzugt an einer Seite des Gerätegehäuses 1, welche an die Seite angrenzt, an der die Schachtöffnung 14 vorgesehen ist. In den Figuren bzw. den gezeigten Beispielen sind verschiedene mögliche Lagen des Befestigungsbereichs 6 veranschaulicht, die diese Bedingung erfüllen.

Speziell veranschaulicht Fig. 1 eine Lage des Befestigungsbereichs 6 und damit des dort angebrachten Betriebsdatenkommunikationsbauteils 4 an einer Unterseite 18 des Gerätegehäuses 1, d.h. an einer im Gebrauch des Bearbeitungsgerätes normalerweise im Wesentlichen unten liegenden Gehäuseseite, axial auf Höhe des Akkuschachts 9, d.h. in Richtung parallel zur Gehäuselängsachse auf Höhe zwischen einem axial vorderen und einem die Schachtöffnung 14 bildenden, axial hinteren Ende des Akkuschachts 9. Die Positionierung des Bauteils 4 am zugehörigen Befestigungsbereich 6 vorzugsweise in einer dafür dienenden Aufnahmemulde der Gehäuseunterseite 18 ist insbesondere anhand der hierzu der Seitenansicht in Fig. 1 hinzugefügten perspektivischen Detailausschnittansicht des betreffenden Gehäusebereichs zu entnehmen. Dabei befindet sich das Betriebsdatenkommunikationsbauteil 4 in diesem gezeigten Beispiel relativ nahe an der Schachtöffnung 14 und ist daher entsprechend leicht über die Schachtöffnung 14 zugänglich.

Fig. 3 zeigt eine zu Fig. 1 alternative Ausführung mit linksseitiger statt oberseitiger Positionierung des Betriebsdatenkommunikationsbauteils 4. In diesem Fall befindet sich der Befestigungsbereich 6 an einer linken Längsseite 16a, wiederum axial auf Höhe des Akkuschachts 9.

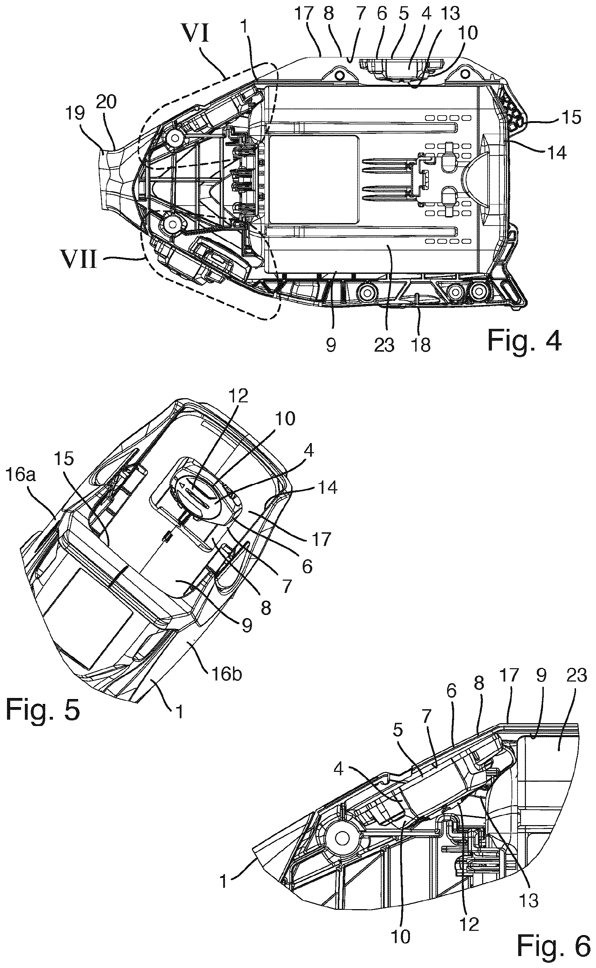

Die Fig. 4 bis 9 veranschaulicht weitere mögliche, je nach Bedarf und Anwendungsfall günstige Positionierungen des Befestigungsbereichs 6 bzw. des Betriebsdatenkommunikationsbauteils 4, wobei der Einfachheit halber in Fig. 4 mehrere verschiedene, alternative Positionierungsmöglichkeiten gemeinsam dargestellt sind, von denen bevorzugt jeweils nur eine hiervon beim jeweiligen realen Bearbeitungsgerät verwendet wird. In den Fig. 5 bis 7 sind die in Fig. 4 gemeinsam gezeigten Positionierungsalternativen jeweils einzeln ausschnittweise dargestellt.

Dabei veranschaulicht Fig. 5 in Verbindung mit Fig. 4 eine oberseitige Positionierung des Betriebsdatenkommunikationsbauteils 4 an der Innenseite 7 der Außenwandung 8 des Gerätegehäuses 1, d.h. der betreffende Befestigungsbereich 6 befindet sich in diesem Fall an der Oberseite 17 des Gerätegehäuses 1, die der Unterseite 18 abgewandt ist. Dabei befindet sich der Befestigungsbereich 6 und damit das Betriebsdatenkommunikationsbauteil 4 wiederum axial auf Höhe des Akkuschachts 9 und vorzugsweise wiederum mit relativ geringem axialem Abstand von der rückseitigen Schaftöffnung 14.

Fig. 6 veranschaulicht in Verbindung mit Fig. 4 eine oberseitige Lage des Befestigungsbereichs 6 und damit Positionierung des Betriebsdatenkommunikationsbauteils 4 axial vor dem Akkuschacht 9 bzw. der darin eingesetzten Akkumulatoreinheit 23. Wenn es sich beim Bearbeitungsgerät, wie in den gezeigten Beispielen, um ein solches vom Schafttyp handelt, grenzt das Gerätegehäuse 1 an einen hinteren Endbereich 20 des axialen Geräteschafts 19 an. Bei der gemäß Fig. 6 in Verbindung mit Fig. 4 gewählten Lage befindet sich der Befestigungsbereich 6 axial zwischen dem hinteren Endbereich 20 des Geräteschafts 19 und dem Akkuschacht 9 an der Gehäuseoberseite 17.

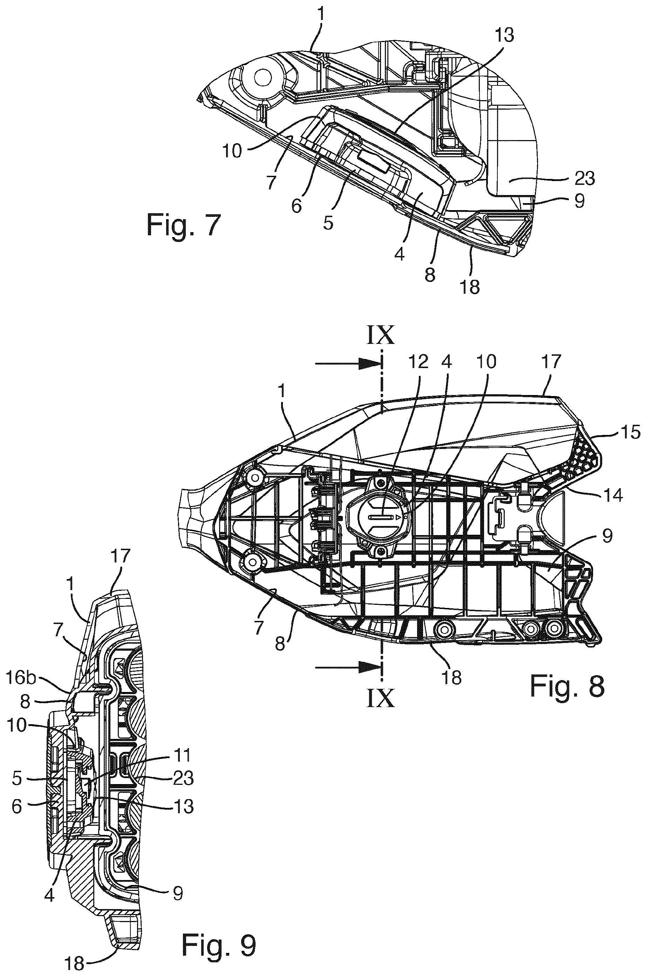

Fig. 7 veranschaulicht in Verbindung mit Fig. 4 eine Lage des Befestigungsbereichs 6 und damit Positionierung des Betriebsdatenkommunikationsbauteils 4 an der Unterseite 18 des Gerätegehäuses 1 axial zwischen dem hinteren Endbereich 20 des Geräteschafts 19 und dem Akkuschacht 9.

Auch bei den Positionierungsoptionen axial zwischen dem hinteren Endbereich 20 des Geräteschafts 19 und dem Akkuschacht 9 gemäß den Fig. 6 und 7 bleibt das Betriebsdatenkommunikationsbauteil 4 vom Akkuschacht 9 über dessen rückseitige Schachtöffnung 14 her zugänglich, wenn sich die Akkumulatoreinheit 23 nicht im Akkuschacht 9 befindet.

Die Fig. 8 und 9 veranschaulichen eine rechtsseitige Lage des Befestigungsbereichs 6 bzw. Positionierung des Betriebsdatenkommunikationsbauteils 4, wiederum axial auf Höhe des Akkuschachts 9, analog zur linksseitigen Positionierung gemäß Fig. 3. Mit anderen Worten befindet sich der Befestigungsbereich 6 im Beispiel der Fig. 8 und 9 an einer rechten Längsseite 16b des Gerätegehäuses 1.

Wie die gezeigten und die weiteren oben erläuterten Ausführungsbeispiele deutlich machen, stellt die Erfindung in vorteilhafter Weise ein handgeführtes Bearbeitungsgerät zur Verfügung, bei dem es insbesondere um ein Garten- oder Forstbearbeitungsgerät handeln kann, alternativ auch um ein anderes handgeführtes Bearbeitungsgerät z.B. aus dem Heimwerkerbereich, und das mit einem Betriebsdatenkommunikationsbauteil ausgerüstet ist, das eine drahtlose Übertragung von Betriebsdaten des Gerätes ermöglicht und geschützt im Inneren des Gerätegehäuses an der Innenseite einer Außenwandung des Gerätegehäuses angeordnet ist. Dies ermöglicht einen optimalen Schutz des Betriebsdatenkommunikationsbauteils gegenüber äußeren Einflüssen, wie z.B. mechanischen Stößen und/oder Verschmutzungen. Gleichzeitig ermöglicht die Positionierung des Betriebsdatenkommunikationsbauteils an bzw. nahe der Gehäuseaußenwand eine optimale Kommunikationsfähigkeit desselben.

## Patentansprüche

1. Handgeführtes Bearbeitungsgerät, insbesondere Garten- oder Forstbearbeitungsgerät, mit
- einem Gerätegehäuse (1),
- einem motorisch antreibbaren Bearbeitungswerkzeug (2),
- einem Antriebsmotor (3) für das Bearbeitungswerkzeug (2) und
- einem an dem Gerätegehäuse (1) angebrachten Betriebsdatenkommunikationsbauteil (4) mit einer Kommunikationsschnittstelle, die zur drahtlosen Übertragung von Betriebsdaten eingerichtet ist,
- wobei das Betriebsdatenkommunikationsbauteil (4) einen Anbringungsbereich (5), mit dem es an einem Befestigungsbereich (6) des Gerätegehäuses (1) angebracht ist, ein Bauteilgehäuse (10), einen Batterieaufnahmeraum (11) im Bauteilgehäuse (10) und auf einer dem Anbringungsbereich (5) abgewandten Bauteilgehäuseseite (13) einen abnehmbaren, den Batterieaufnahmeraum (11) nach außen abdeckenden Gehäusedeckel (12) aufweist,
**dadurch gekennzeichnet, dass**
- das Gerätegehäuse (1) einen Akkuschacht (9) zum entnehmbaren Einsetzen einer den Antriebsmotor speisenden Akkumulatoreinheit aufweist und das Betriebsdatenkommunikationsbauteil (4) vom Akkuschacht (9) her zugänglich freiliegt,
- der Gehäusedeckel (12) vom Akkuschacht (9) her zugänglich freiliegt und
- sich der Befestigungsbereich (6) an einer Innenseite (7) einer Außenwandung (8) des Gerätegehäuses (1) befindet.

2. Handgeführtes Bearbeitungsgerät nach Anspruch 1, weiter **dadurch gekennzeichnet, dass** das Betriebsdatenkommunikationsbauteil (4) eine mit mindestens einem Sensor gekoppelte Auswerteeinrichtung zur Ermittlung der Betriebsdaten anhand von durch den Sensor erfassten, von einem Betriebszustand des Bearbeitungswerkzeugs (2) abhängigen Messdaten aufweist.

3. Handgeführtes Bearbeitungsgerät nach Anspruch 2, weiter **dadurch gekennzeichnet, dass** das Betriebsdatenkommunikationsbauteil (4) einen Betriebsdatenspeicher zum Speichern der von der Auswerteeinrichtung ermittelten Betriebsdaten aufweist.

4. Handgeführtes Bearbeitungsgerät nach Anspruch 2 oder 3, weiter **dadurch gekennzeichnet, dass** das Betriebsdatenkommunikationsbauteil (4) den Sensor beinhaltet.

5. Handgeführtes Bearbeitungsgerät nach einer der Ansprüche 1 bis 4, weiter **dadurch gekennzeichnet, dass**
- der Akkuschacht (9) eine Schachtöffnung (14) an einer Rückseite (15) des Gerätegehäuses (1) oder an einer Oberseite (17) des Gerätegehäuses (1) aufweist und
- sich der Befestigungsbereich (6) an einer an die Seite mit der Schachtöffnung angrenzenden Seite des Gerätegehäuses (1) befindet.

6. Handgeführtes Bearbeitungsgerät nach Anspruch 5, weiter **dadurch gekennzeichnet, dass** sich der Befestigungsbereich (6) axial auf Höhe des Akkuschachts (9) an einer Längsseite (16a, 16b) oder an einer Unterseite (18) oder an der Oberseite (17) des Gerätegehäuses (1) befindet.

7. Handgeführtes Bearbeitungsgerät nach einem der Ansprüche 1 bis 6, weiter **dadurch gekennzeichnet, dass**
- es einen axialen Geräteschaft (19) mit einem hinteren Endbereich (20), an dem sich das Gerätegehäuse (1) befindet, und einem vorderen Endbereich (21) aufweist, an dem sich das Bearbeitungswerkzeug (2) befindet, und
- sich der Befestigungsbereich (6) axial zwischen dem hinteren Endbereich (20) des Geräteschafts (19) und dem Akkuschacht (9) befindet.

## Claims

1. Hand-held working apparatus, preferably a gardening or forestry working apparatus, comprising
- an apparatus housing (1),
- a working tool (2) capable of being motor driven,
- a drive motor (3) for the working tool (2) and
- an operating data communication component (4) fitted to the apparatus housing (1) and having a communication interface that is configured for wireless transmission of operating data,
- wherein the operating data communication component (4) comprises a mounting region (5) by which it is mounted on an attachment region (6) of the apparatus housing (1), a component housing (10), a battery receiving space (11) in the component housing (10), and a removable housing cover (12) that outwardly covers the battery receiving space (11) and is located on a component housing side (13) facing away from the mounting region (5),
**characterized in that**
- the apparatus housing (1) comprises a battery compartment (9) for removable insertion of an accumulator unit that feeds the drive motor and **in that** the operating data communication component (4) is freely accessible from the battery compartment (9),
- the housing cover (12) is freely accessible from the battery compartment (9), and
- the attachment region (6) is located on an inner side (7) of an outer wall (8) of the apparatus housing (1).

2. Hand-held working apparatus according to Claim 1, further **characterized in that** the operating data communication component (4) comprises an evaluation device coupled having at least one sensor for determining the operating data on the basis of measurement data captured by the sensor, said data being dependent on an operating state of the working tool (2).

3. Hand-held working apparatus according to Claim 2, further **characterized in that** the operating data communication component (4) comprises an operating data memory for storing the operating data determined by the evaluation device.

4. Hand-held working apparatus according to Claim 2 or 3, further **characterized in that** the operating data communication component (4) contains the sensor.

5. Hand-held working apparatus according to any one of Claims 1 to 4, further **characterized in that**
- the battery compartment (9) comprises a compartment opening (14) on a rear side (15) of the apparatus housing (1) or on a top side (17) of the apparatus housing (1) and
- the attachment region (6) is located on a side of the apparatus housing (1) adjacent to the side having the compartment opening.

6. Hand-held working apparatus according to Claim 5, further **characterized in that** the attachment region (6) is located axially at the height of the battery compartment (9) on a longitudinal side (16a, 16b) or on an underside (18) or on the top side (17) of the apparatus housing (1).

7. Hand-held working apparatus according to any one of Claims 1 to 6, further **characterized in that**
- it comprises an axial apparatus shaft (19) with a rear end region (20) on which the apparatus housing (1) is located, and a frontal end region (21) on which the working tool (2) is located, and
- the attachment region (6) is axially located between the rear end region (20) of the apparatus shaft (19) and the battery compartment (9).

## Revendications

1. Appareil de traitement à guidage manuel, en particulier appareil de jardinage ou de sylviculture, avec
- un boîtier (1) d'appareil,
- un outil de traitement (2) pouvant être entraîné par moteur,
- un moteur d'entraînement (3) pour l'outil de traitement (2) et
- un composant de communication (4) de données de fonctionnement installé sur le boîtier (1) d'appareil avec une interface de communication, qui est mise au point pour la transmission sans fil de données de fonctionnement,
- le composant de communication (4) de données de fonctionnement comportant une zone d'installation (5), avec laquelle il est installé sur une zone de fixation (6) du boîtier (1) d'appareil, un boîtier (10) d'appareil, un espace de réception (11) de batterie dans le boîtier (10) de composant et, sur un côté (13) de boîtier de composant opposé à la zone d'installation (5), un couvercle (12) de boîtier amovible recouvrant vers l'extérieur l'espace de réception (11) de batterie,
**caractérisé en ce que**
- le boîtier (1) d'appareil comporte un compartiment batterie (9) destiné à insérer de manière retirable une unité accumulateur alimentant le moteur d'entraînement et le composant de communication (4) de données de fonctionnement est accessible depuis le compartiment batterie (9),
- le couvercle (12) de boîtier est accessible depuis le compartiment batterie (9) et
- la zone de fixation (6) se trouve à l'intérieur (7) d'une paroi extérieure (8) du boîtier (1) d'appareil.

2. Appareil de traitement à guidage manuel selon la revendication 1, **caractérisé en outre en ce que** le composant de communication (4) de données de fonctionnement comporte un dispositif d'évaluation couplé à au moins un capteur pour déterminer les données de fonctionnement à l'aide de données de mesure détectées par le capteur, dépendant d'un état de fonctionnement de l'outil de traitement (2).

3. Appareil de traitement à guidage manuel selon la revendication 2, **caractérisé en outre en ce que** le composant de communication (4) de données de fonctionnement comporte une mémoire de données de fonctionnement pour mémoriser les données de fonctionnement déterminées par le dispositif d'évaluation.

4. Appareil de traitement à guidage manuel selon la revendication 2 ou 3, **caractérisé en outre en ce que** le composant de communication (4) de données de fonctionnement renferme le capteur.

5. Appareil de traitement à guidage manuel selon l'une des revendications 1 à 4, **caractérisé en ce que** par ailleurs
- le compartiment batterie (9) comporte une ouverture de compartiment (14) sur un côté arrière (15) du boîtier d'appareil (1) ou sur un côté supérieur (17) du boîtier (1) d'appareil et
- la zone de fixation (6) se trouvant sur un côté du boîtier (1) d'appareil adjacent au côté avec l'ouverture de compartiment.

6. Appareil de traitement à guidage manuel selon la revendication 5, **caractérisé en outre en ce que** la zone de fixation (6) se trouve axialement à hauteur du compartiment batterie (9) sur un côté long (16a, 16b) ou sur un côté inférieur (18) ou sur le côté supérieur (17) du boîtier (1) d'appareil.

7. Appareil de traitement à guidage manuel selon l'une des revendications 1 à 6, **caractérisé en ce que**
- il comporte un compartiment axial (19) d'appareil avec une zone d'extrémité arrière (20), sur laquelle se trouve le boîtier (1) d'appareil, et une zone d'extrémité avant (21), sur laquelle se trouve l'outil de traitement (2), et
- la zone de fixation (6) se trouve axialement entre la zone d'extrémité arrière (20) du compartiment (19) d'appareil et le compartiment batterie (9).
